# EUROPEAN PATENT SPECIFICATION

(11) **EP 3 114 405 B1**
(45) Date of publication and mention of the grant of the patent: **15.11.2017**
(21) Application number: 15706707.5
(22) Date of filing: 11.02.2015
(51) Int. Cl.: F21K 9/232, F21K 9/61, F21K 9/64, F21Y 115/10

(54) **LAMP ASSEMBLY**
LAMPENANORDNUNG
ENSEMBLE DE LAMPE

(30) Priority: 24.02.2014 EP 14156284
(43) Date of publication of application: 11.01.2017
(73) Proprietor: Philips Lighting Holding B.V., 5656 AE Eindhoven (NL)
(72) Inventor: WEIJERS, Aldegonda Lucia, NL-5656 AE Eindhoven (NL); TRALLI, Aldo, NL-5656AE Eindhoven (NL); HAENEN, Ludovicus Johannes Lambertus, NL-5656AE Eindhoven (NL)
(74) Representative: Stil, Lambert Johannes
(86) International application number: PCT/EP2015/052807
(87) International publication number: WO 2015/124469

(56) References cited:
- WO-A1-2013/017403
- WO-A1-2013/086694
- CN-U- 202 203 686
- JP-A- 2004 342 411
- US-A1- 2008 137 360
- US-A1- 2009 059 593
- US-A1- 2009 212 698
- US-A1- 2012 014 111
- US-A1- 2013 194 797
- US-A1- 2013 265 796
- US-B2- 7 111 972

## Description

### FIELD OF THE INVENTION

The present invention relates to a lamp assembly comprising a support structure supporting a plurality of light sources, a light radiator and a plurality of light guides.

### BACKGROUND OF THE INVENTION

Filament lamps are widely used in systems where there is additional optics, also so called secondary optics, to re-direct the light outputs in the required way. The secondary optics may be reflectors, lenses or combinations thereof. Many LED retrofit lamps use pre-knowledge of the secondary optics to offer sufficient light in the direction/position that is required for the specific application. That makes these retrofit lamps only suited for that specific application. It is also to be known that such specific retrofit lamps are not allowed in some regions such as e.g. EMEA.

The major problem with these prior art LED retrofit lamps is that the bare far-field distribution and size of the emitting surface is not equal to the incandescent lamps that they are intended to replace. Both requirements of far-field distribution and the size of the emitting surface are required to be within certain limits. The size and the mechanical constraints are given in various regulations, the automotive ECE R37 regulations for filament lamps being one of them and ECE R99 regulations for gas discharge lamps another one. In the ECE R37 regulations, the tolerance box of the source itself is often given representing the outer borders of the position of the filament. Often also the maximum size of the filament and the total filament lamp itself is given. If a real LED based retrofit lamp could meet all the requirements of a regulation, e.g. all requirements set in the ECE R37 regulations, such as flux, position of the emitting surface, tolerance box, color etc., and also provide a light distribution near to an incandescent filament lamp, i.e. an omni-directional light distribution, such LED based retrofit lamps could be used in all optics which are normally used for the original incandescent lamp. The same is the case if one wants to replace automotive gas discharge lamps described in ECE R99 by LED retrofit lamps.

The today known retrofit lamps are peak solutions and need to fit into existing reflectors or secondary optics reproducing the beam pattern provided by a filament lamp. Pre-knowledge of the secondary optics is required to make these peak solutions, which is not always available or even allowed. Also cost-down of these lamps need a development which is time consuming and expensive.

US 7 111 972 discloses one example of a LED lamp assembly provided with a light guide. The lamp assembly is compatible with existing sockets normally reserved for filament lamps. Light emitted from a plurality of LED's is guided trough a light pipe made of an optically clear material towards a light radiator. The light pipe is surrounded by an opaque shroud to keep the light from exiting the light pipe other than through the light radiator.

US 2009/0212698 A1 and CN 202203686 U disclose lamp assemblies according to the preamble of claim 1.

### SUMMARY OF THE INVENTION

It is an object of the present invention to provide a retrofit lamp assembly that may replace filament lamps no matter type of secondary optics.

Another object is to provide a retrofit lamp assembly offering a common platform which can be adapted to the intended specific application and which may meet the requirements set out at least in the ECE R37 regulations.

According to a first aspect of the invention, these and other objects are achieved by a lamp assembly comprising the technical features of claim 1. By the present invention a lamp assembly having a common platform is provided. The support structure supporting a plurality of light sources may be provided as a common platform that may fit into standardized sockets or fittings, while the design of the light guides and the light reflector is chosen depending on the requirements of the intended application. Thus, the light guides and the light radiator may be customized for each application while the support structure may be the same. The size of the light radiator may be close to the tolerance box dimensions and filament dimensions described in a specific regulation, such as the ECE R37 regulations. Also the total retrofit lamp dimensions may be within the dimensions described in the regulations, e.g. the ECE R37 regulations, by which it also may mechanically fit in all fixtures designed for the lamp to be replaced. The retrofit lamp assembly will work with all secondary optics intended for filament lamps. Thereby peak solutions may be avoided and the overall cost of providing a retrofit lamp assembly may be reduced.

The light guides may be constituted by massive bodies and be made of a material allowing a total internal reflection of light supplied to the light guides from the plurality of light sources.

The light guides and the light radiator may be joined to form one unitary body. The lamp assembly may thereby easily be customized to an intended application by providing the support structure supporting a plurality of light sources as a standard platform which in turn may be provided with a unitary body comprising light guides and a light radiator suitable for the intended application.

The lamp assembly may comprise a plurality of light collecting arrangements, wherein a light collecting arrangement is arranged in the transition between an individual light source or a group of light sources and the inlet portion of an individual light guide. The light collecting arrangements may be formed by a collimator. By the light collecting arrangement, light to be emitted from the light sources may be collected and collimated, whereby any uncontrolled light leakage may be prevented. This is especially useful in case the light guides have a curved longitudinal extension towards the light radiator. The collimators and especially the CPC kind of collimators (compound parabolic collector/concentrator) collimate the light in an effective way preventing leakage of light along the curvature of a bent transparent light guide. It is to be understood that the curvature, the thickness of the light guide and the refractive index of the transparent material of the light guide determines a minimum amount of collimation.

The light radiator may comprise a reflection surface enhancing the light distribution, i.e. being more close to that of the light source to be replaced.

The light radiator may comprise light scattering metal particles. The light scattering metal particles are arranged to scatter the light within the light radiator. Preferable, the light scattering metal particles are high reflecting and thermally good conducting. One example of a suitable type of light scattering metal particles is particles made of Ag.

The outlet portion of the light guides facing the light radiator may comprise phosphor. This may also include the rest of the surface of the light radiator. Also, phosphor may be embedded in the light radiator itself preferably with additional scattering particles to achieve homogeneous coloured distribution. By providing phosphor, the required colour of the lamp assembly may be determined but also heat may be better distributed. Due to light conversion from blue to visible light not all the energy of the blue light is converted due to Stokes Shift. Because the conversion does not take place near the LED, heat may be better distributed. It is to be understood that it is also possible of a hybrid version using cool light LED combined with some remote phosphor at the filament.

It is noted that the invention relates to all possible combinations of features recited in the claims.

### BRIEF DESCRIPTION OF THE DRAWINGS

This and other aspects of the present invention will now be described in more detail, with reference to the appended drawings showing embodiments of the invention. Like reference numerals refer to like elements throughout the drawings.
Fig. 1 discloses a first embodiment of a lamp assembly according to the invention.
Fig. 2 discloses an embodiment of a light collecting arrangement of the lamp assembly.
Figs. 3 to 6 disclose different embodiments of a heat sink to be used with the lamp assembly.

### DETAILED DESCRIPTION

The present invention will now be described more fully hereinafter with reference to the accompanying drawings, in which currently preferred embodiments of the invention are shown. The invention may, however, be embodied in many different forms and should not be construed as limited to the embodiments set forth herein. Rather, these embodiments are provided for thoroughness and completeness, and fully convey the scope of the invention to the skilled person.

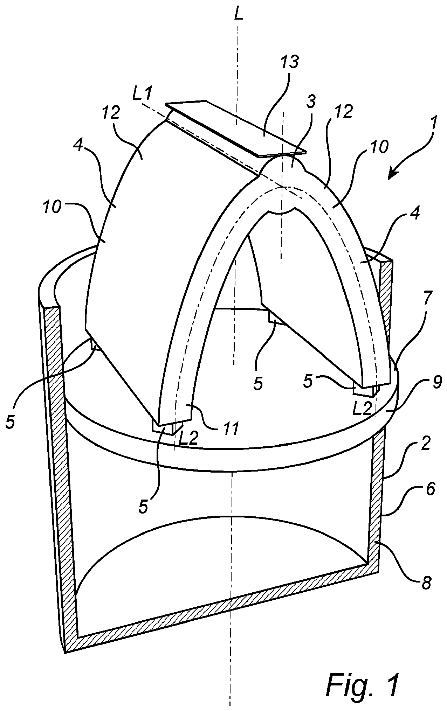

Making reference to Figure 1, a general overview of one embodiment of the lamp assembly 1 is disclosed. The lamp assembly 1 comprises a support structure 2 supporting a light radiator 3 and a plurality of light guides 4. The light guides 4 have an elongated geometry extending between the light radiator 3 and a plurality of light sources 5 supported by the support structure 2. The light sources 5 do not need to be in optical contact with the light guides 4. Further, the light guides may not be in optical contact with the light radiator although such contact may be preferred for mechanical reasons.

The support structure 2 may be used to fit the lamp assembly 1 to e.g. a socket (not disclosed). The support structure 2 may also be used to support a voluntary non-disclosed bulb or encapsulation. Such voluntary bulb or encapsulation may be used for additional thermal management.

In the disclosed embodiment the support structure 2 defines a hollow body 6 having a longitudinal center axis coinciding with a longitudinal centre axis L of the lamp assembly 1. The support structure 2 or at least parts thereof may be formed by metal or a plastic material providing a thermal conductivity meeting the thermal requirements for the intended application of the lamp assembly 1. Thus, the support structure 2 may be seen as a heat sink 8 contributing to the thermal management.

The support structure 2 comprises a support surface 7 extending transverse to the longitudinal center axis L of the lamp assembly 1. The support surface 7 may be integral with the hollow body 6 or be mounted thereto.

The support surface 7 is arranged to support, either directly or indirectly the plurality of light sources 5 and the plurality of light guides 4 and may be thermally connected to additional thermal fins, i.e. a heat-sink.

In case the support surface 7 is arranged to directly support the light sources 5, the support surface 7 may be constituted by a PCB (printed circuit board) 9 mounted to the support structure 2. Alternatively, in case the support surface 7 is arranged to indirectly support the light sources 5, the support surface 7 may be constituted by a surface integrated with the support structure 2, which surface is provided with a plurality of through holes arranged in a pattern corresponding to the plurality of light sources arranged on a PCB to be arranged below the support surface. The light from the light sources will thereby be emitted through said holes.

The light sources 5 are powered by a driver (not disclosed) which may be arranged in a number of positions, such as being received inside the hollow body 6. It is to be understood that the driver may be arranged in other positions depending on the intended use of the lamp assembly 1. Potting material may be used to fill up the air gaps in the hollow body 6 and by this improving thermal management. A driver as such is well known in the art whereby no further explanation thereof is given.

In case the support surface 7 is integral with the hollow body 6 this may be made by deep drawing a sheet metal plate or by molding a plastic material.

The support surface 7 supports the plurality of light sources 5. In the disclosed embodiment four individual light sources 5 are arranged on a distance from each other. It should be understood that the light sources 5 also may be arranged in a plurality of groups, each group comprising an array of light sources 5.

The light sources 5 may be of the LED-type and may be provided as attached LED assemblies, so called top LED's, or be provided directly on the PCB, so called "chip on board".

In the embodiment disclosed in Figure 1, two light guides 4 are provided having an elongated geometry extending between the plurality of light sources 5 supported by the support structure 2 and the light radiator 3.

An inlet portion 11 of each of the light guides 4 is arranged to face at least one of the plurality of light sources 5 and thereby receive light from at least one light source 5 or at least one group of light sources 5. Further, an outlet portion 12 of each of the light guides 4 is arranged to face the light radiator 3. The light guides 4 will thereby receive light to be emitted from the plurality of light sources 5 and guide the light towards the light radiator 3 from which it will be emitted.

In the disclosed embodiment the light guides 4 are formed as two slightly curved legs 10 joining the light radiator 3 on opposite sides of a longitudinal centre axis L1 of the light radiator 3. Each light guide 4 has a longitudinal center axis L2 arranged essentially perpendicular to the longitudinal center axis L1 of the light radiator 3. As will be understood from further embodiments to be explained below, a perpendicular intersection between the two longitudinal center axes L1 and L2 of the light radiator 3 and the light guides 4 respectively is not necessary.

The light guides 4 are formed as a massive body of a transparent or translucent material such as plastics, glass, ceramic or silicone providing total internal reflection properties, also known as TIR. It has been shown that by making the light guides 4 of glass, the temperature of the light guides 4 may be decreased by 30-60 °C for a certain input power as compared to a plastic material if remote phosphor is used at the filament and blue light emitting LED as initial sources. Thus, the light guides may contribute to the heat sink effect. If white LEDs are used as a light source and no remote phosphor is used, the effect of glass instead of a plastic material in the form of PMMA has shown to be much less and in the order of 10-15 °C for a certain input power. This effect of additional heat-sink is best if a good thermal connection exists between the light guides and the heat sources such as the light sources and the driver.

The purpose of the light radiator 3 is to mimic a light filament of an incandescent lamp. It is to be understood that the light radiator 3 may have numerous designs within the scope of the invention and that the embodiment to be described below is only one possible design. In the disclosed embodiment the light radiator 3 is oriented to extend with its longitudinal center axis L1 essentially perpendicular to the longitudinal centre axis L of the lamp assembly 1.

The light radiator 3 is formed as a straight cylindrical geometry. Other extensions than straight cylindrical extensions and geometries are possible. By providing a non-straight cylindrical extension it has been found that the light may be better directed depending on the intended application of the lamp assembly 1. Basically, incoming light is going forward. By using scattering, such as volume scattering in which the volume of the light radiator comprises light scattering particles, the light may be made to go all over. That does however cost efficiency and it is difficult to get the desired direction. It has been shown that by instead increasing the area of the light radiator 3 perpendicular to the main direction of the light, it is possible to positively influence the light distribution.

The cross section of the light radiator 3 may be uniform along the full length thereof or vary. Also the cross section may have other geometries than a circular cross section.

The light radiator 3 is made of a transparent or translucent material such as plastic, glass or silicone. The material may comprise light scattering particles.

The light radiator 3 may be provided with an optional reflector 13. In its easiest form, see Figure 1, the reflector 13 may be an external reflector supported by the light radiator 3. The reflector 13 may also be supported by the light guides 4, the support structure 2 or even a heat sink to be described below. In the disclosed embodiment the reflector is disclosed as a flat surface. It is to be understood that other geometries are possible. As an alternative to an optional reflector 13 is may be possible to add reflecting dots or lines or any other pattern on top of the light radiator to thereby fine tune the light distribution.

The light radiator 3 and the plurality of light guides 4 may be integrated to form one unitary body. Thereby, depending on the intended application of the lamp assembly 1, the support structure 2 may be provided with a desired geometry of the unitary body comprising a plurality of light guides 4 integrated with the light radiator 3.

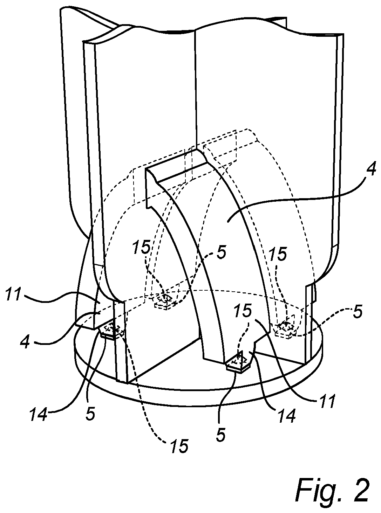

As disclosed in Figure 2, a light collecting arrangement 14 may be arranged in the transition between the inlet portion 11 of the respective light guides 4 and the light sources 5 or the group of light sources associated therewith. The light collecting arrangement 14 may be in the form of a collimator 15. Especially a CPC kind of collimator has shown to be very effective. A CPC is also known as a compound parabolic collector/concentrator. The purpose of the light collecting arrangement 14 is to collimate the light to be emitted from the light sources 5 and guide it into the light guides 4. This is especially useful in case the light guides 4 have a non-linear extension adjacent their inlet portions 11. The collimator may in its easiest form have a funnel shape although other geometries are possible. The collimator may be directly moulded on the light guide.

As an alternative to a dedicated light collecting arrangement, it is possible to tilt (not illustrated) the light sources in view of the inlet portion of the light guide. This may by way of example be made by tilting the surface supporting the light sources. This has shown to be effective in light guiding when the light guide is straight. In theory it can be shown that by tilting, a collimator may be omitted if the refractive index of the light guide exceeds 1.4142.

For better thermal management, the lamp assembly 1 may be provided with a dedicated heat sink 16. The light guides 4 may be thermally connected to such heat sink 16. In the embodiments to be disclosed and discussed below, the heat sink 16 has a fin-like geometry although it is to be understood that the heat sink 16 may be provided with any unambiguous geometry as long as the thermal managing requirements for the intended application of the lamp assembly 1 may be met. When designing the heat sinks 16, it should be known that the heat sinks may influence the light distribution. By way of example:
If heat sinks 16 having a fin-like geometry are made of a transparent material like PMMA or glass, the light distribution will not be especially influenced. Also, by adding a transparent thermal lacquer, the thermal cooling effect may be increased with nearly no optical effect.

If heat sinks 16 having a fin-like geometry are made like a mirror and are positioned in a way that the positions of the resulting virtual light source is within the actual light source, the light distribution will nearly not be influenced. Only inter-reflections of external optics and the heat fin may influence the total distribution. With a special transparent thermal lacquer, thermal cooling may be further increased.

If the heat sinks 16 having a fin-like geometry are made of a white diffuse material, the total light output of the lamp may still be high while the light distribution is significantly influenced.

If the heat sinks 16 having a fin-like geometry are made black, thermal optimized cooling effect may be high but the optical efficiency may drop and the light distribution may be influenced.

Further, the geometry may be used to improve the light distribution to thereby be closer to that of a lamp to be replaced.

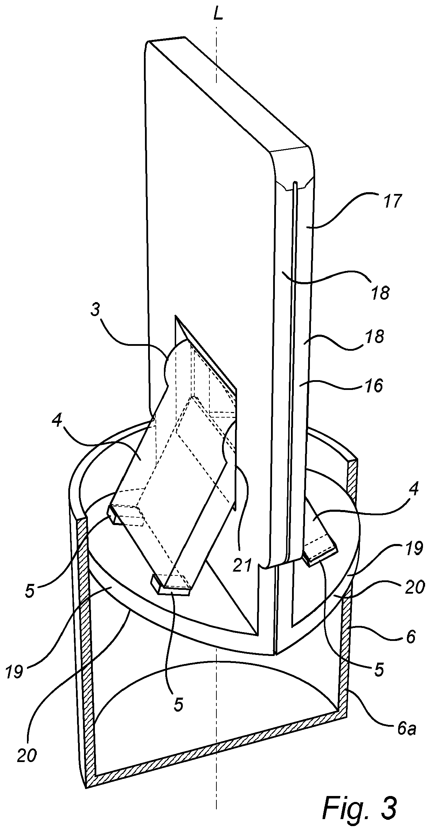

A first example of a fin like heat sink 16 is disclosed in Figure 3. The heat sink 16 is arranged as a double folded sheet metal member 17 having two fin forming legs 18. Preferable, the thickness of the fin forming legs 18 should be thin in comparison to the light radiator. The heat sink 16 may be made of metal or a thermal conductive plastic material. The free ends 19 of the two legs 18 are bent in a direction facing away from the longitudinal center axis L of the lamp assembly 1 to thereby form two flanges 20. The two flanges 20 are mounted to the interior wall 6a of the hollow body 6 of the support structure 2 to thereby form the support surface 7 supporting the light sources 5 and the light guides 4. In this embodiment the light sources 5 are preferably indirectly supported by the resulting support surface 7, i.e. the PCB (not disclosed) may be arranged below the support surface.

It is advantageous if the light guides 4 are thermally connected to the support surface 7 via their inlet portions 11 to thereby enhance heat transfer.

The mounting of the two flanges 20 to the interior wall 6a may be mechanical and be achieved by the inherent spring-back effect provided by the bending.

The heat sink 16 comprises a central cut-out 21 to allow the light guides 4 and the light radiator 3 to bridge the heat sink 16 by extending through said cut-out 21. To enhance heat transfer, the light radiator 3 may be thermally connected to the heat sink 16 via the cut-out 21.

The legs 18 may be specular high reflecting for the visible light and for the rest of the spectrum thermally optimized e.g. black. If the legs 18 are correctly orientated, the effective source does not become optically larger by which light distribution with external optics will nearly not be influenced by the legs 18. By being thermally black for the rest of the spectrum, the legs 18 may still be thermally very effective. A special transparent lacquer may be used which increases thermal cooling effect without disturbing the visible radiation also known as light.

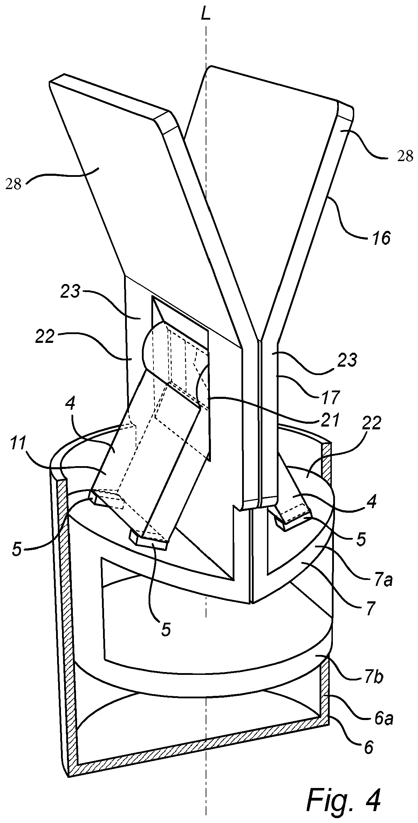

A second example of a heat sink 16 is disclosed in Figure 4. The heat sink 16 is formed by a one-piece folded sheet metal member 17 providing an upper 7a and a lower 7b support surface 7 to be received in the hollow body 6 of the support structure 2 by being mounted to the interior wall 6a thereof. The upper surface 7a receives and supports the plurality of light sources 5 and light guides 4. In this embodiment the light sources 5 are preferably indirectly supported by the resulting support surface 7, i.e. the PCB (not disclosed) may be arranged below the support surface. The heat sink 16 may be made of metal or a thermal conductive plastic material.

The light guides 4 may be thermally connected to the support surface 7 via their inlet portions 11.

The folded sheet metal member 17 comprises two legs 22 extending past the upper surface 7a and which meet in a waist portion 23 comprising a central cut-out 21 to allow the light guides 4 and the light radiator 3 to bridge the heat sink 16 by extending through said cut-out 21. The free ends of the legs 22 of the folded sheet metal member 17 form two bent apart fin-like flanges 28 enhancing heat transfer.

The mounting of the heat sink 16 to the interior walls 6a of the hollow body 6 may be achieved by the inherent spring-back effect provided by the bending whereby no separate joint there between is required. If necessary, an adhesive may be used.

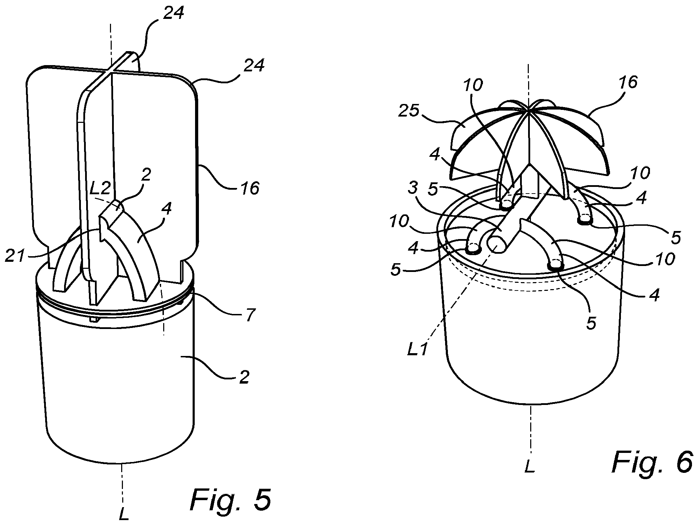

Yet another example of a heat sink 16 is disclosed in Figure 5. The heat sink 16 is provided by two crisscrossing sheet metal surfaces 24 joined to the support surface 7 of the support structure 2. The heat sink 16 may comprise a central cut-out 21 to allow the light guides 4 and the light radiator 2 to bridge the heat sink 16 by extending through said cut-out 21. The light guides 4 may be thermally connected to the crisscrossing sheet metal surfaces 24 along the longitudinal extension L2 of the light guides 4. The heat sink 16 may be made of metal or a thermal conductive plastic material.

As noted, no matter design of the heat sink 16, the width of the broadest portion of the heat sink 16 as seen perpendicular to the longitudinal center axis L of the lamp assembly 1, is preferably smaller than the opening of any bulb that may be joined to the lamp assembly 1 to allow insertion therein.

The surface extension of the heat sink 16 no matter design should be designed and dimensioned to meet the thermal requirements for the lamp assembly 1 depending on the intended application.

As given above, the heat sink 16 may be mechanically mounted to the support structure 2 by friction or clamping. Yet another possibility to mount the heat sink 16 is to overmould (not disclosed) any of the heat sink 16, the light guides 4 and the support surface 7 by an adhesive or plastic material. When over moulding, care should be taken to ensure that any optical contact caused by the over moulding does not affect the light distribution and the size of the emitting radiator. In the latter case also the PCB may be overmoulded and thereby be encapsulated together with the light guides 4.The overmoulding material, may contribute to the overall thermal management of the lamp assembly and also contribute to the mechanical strength..

It is to be understood that the light guides 4 may be designed in a number of ways within the scope of the invention. One such possible design is disclosed with reference to Figure 6 in which the light guides 4 are formed as four legs 10. Two of the legs 10 join the light radiator 2 on opposite sides of the longitudinal centre L1 of the light radiator 3, whereas two legs 10 join the light radiator 3 essentially in parallel with the longitudinal center axis L1 of the light radiator 3.

In the embodiment of Figure 6, the lamp assembly is provided with yet another example of a heat sink 16 forming an umbrella-like thin-walled structure in which a plurality of sheet metal elements 25 are crisscrossing each other along an axis coinciding with the longitudinal centre axis of the lamp assembly L.

No matter embodiment, the light radiator 3 may distribute the light received from the light guides 4 by scattering, i.e. surface scattering or volume scattering. The latter may be achieved by e.g. intermixing scattering particles into the material used for the light guides 4. By combining this with so called remote phosphor to be discussed below the color of the light may be fine tuned.

It is to be known that some light will always be scattered rearwards towards the support surface 7. It is therefore advantageous to make the support surface high reflective to thereby redirect light away from the support surface. This may by way of example be made by making the support surface 7 of a white material or the PCB, in case that acts as a support surface, of a high reflective material.

In its most simple form, the light sources 5 are white LED's. This is known in the art as a direct white solution.

Another possibility is to use a so called remote phosphor solution in which blue LED's are used. In addition to the blue LED's, phosphor (not disclosed) is arranged at or adjacent the light radiator 3. This may by way of example be made by the outlet portion 12 of the light guides 4 facing the light radiator 3 comprising phosphor. Alternatively phosphor may be embedded in the light radiator itself, preferably with additional scattering particles to achieve homogeneous coloured distribution. By the remote phosphor solution, the required colour of the lamp assembly may be determined or fine tuned. An advantage of remote phosphor is that a somewhat higher efficiency is made possible and also thermal advantages are provided. Not all the heat is generated by the light sources and the driver PCB, but part of the heat is generated at the area provided with remote phosphor. Thus a distribution of the remote phosphor facilitates the overall thermal management.

Yet another possibility is to use a hybrid solution in which the light sources are cold white LED's combined with phosphor at or adjacent the light radiator 3. Such hybrid solution allows a fine tuning of the light colour.

The person skilled in the art realizes that the present invention by no means is limited to the preferred embodiments described above. On the contrary, many modifications and variations are possible within the scope of the appended claims. For example, the heat sink may contribute to the light reflection.

Moreover, the light radiator may comprise light scattering metal particles. The light scattering metal particles are arranged to scatter the light within the light radiator. Preferable, the light scattering metal particles are high reflecting and thermally good conducting. One example of a suitable type of light scattering metal particles is particles made of Ag.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

Summarizing, the invention relates to a lamp assembly 1 comprising a support structure 2 supporting a plurality of light sources 5, a light radiator 3 and a plurality of light guides 4. The light guides 4 have an elongated geometry extending between the plurality of light sources 5 and the light radiator 3 with an inlet portion 11 of each of the light guides 4 facing at least one of the plurality of light sources 5 and an outlet portion 12 of each of the light guides 4 facing the light radiator 3. The light radiator 3 is arranged to mimic a light filament of an incandescent lamp.

## Claims

1. A lamp assembly (1), comprising a support structure (2) supporting a plurality of light sources (5), a longitudinal centre axis L, a light radiator (3) and a plurality of light guides (4), the light guides (4) having an elongated geometry extending between the plurality of light sources (5) and the light radiator (3) with an inlet portion (11) of each of the light guides (4) facing at least one of the plurality of light sources (5) and an outlet portion (12) of each of the light guides (4) facing the light radiator (3), the light radiator (3) being arranged to mimic a light filament of an incandescent lamp, said lamp assembly (1) further comprising a heat sink (16) having a fin-like geometry (18,28) extending in the direction of the longitudinal centre axis L away from the light guides (4), said heat sink being thermally connected to the light guides (4), **characterized in that** the fin-like geometry comprises two legs (18, 28) having a cut-out (21) to allow the light guides (4) and the light radiator (3) to bridge the heat sink (16) by extending through said cut-out (21).

2. The lamp assembly according to claim 1, wherein the light guides (4) are constituted by massive bodies.

3. The lamp assembly according to any of the preceding claims, wherein the plurality of light guides (4) and the light radiator (3) are joined to form one unitary body.

4. The lamp assembly according to any of the preceding claims, wherein the inlet portion (11) of an individual light guide (4) of the plurality of light guides is arranged to receive light from more than one individually arranged light source (5) or more than one group of light sources (5).

5. The lamp assembly according to any of the preceding claims, wherein the longitudinal centre axes (L2) of the plurality of light guides (4) are arranged perpendicular to the longitudinal centre axis (L1) of the light radiator (3).

6. The lamp assembly according to any of the preceding claims, wherein the plurality of light guides (4) have a non-linear longitudinal extension.

7. The lamp assembly according to any of the preceding claims, wherein the plurality of light guides (4) are made of a material allowing a total internal reflection of light supplied to the light guides (4) from the plurality of light sources (5).

8. The lamp assembly according to any of the preceding claims, further comprising a plurality of light collecting arrangements (14), wherein a light collecting arrangement is arranged in the transition between a light source (5) or a group of light sources and the inlet portion (11) of an individual light guide (4).

9. The lamp assembly according to any of the preceding claims, wherein the light radiator (3) is made of plastic, glass, ceramic or a silicone based material comprising light scattering particles.

10. The lamp assembly according to any one of the preceding claims, wherein the light radiator (3) comprises a reflector or light scattering metal particles.

11. The lamp assembly according to any of the preceding claims, wherein the outlet portions (12) of the plurality of light guides (4) facing the light radiator (3) comprise phosphor, or wherein the light radiator (3) comprises phosphor.

12. The lamp assembly according to any of the preceding claims, wherein the heatsink (16) is made from metal, a thermal conductive plastic material or glass.

13. The lamp assembly according to any of the claims 1 to 11, wherein the heat sink (16) is made from a transparent material.

14. The lamp assembly according to any of the preceding claim, further comprising an additional component from the group consisting of a bulb, a socket, and a driver PCB.

## Patentansprüche

1. Lampenanordnung (1), umfassend eine Trägerstruktur (2), die eine Vielzahl von Lichtquellen (5) trägt, eine Längsmittelachse L, einen Lichtstrahler (3) und eine Vielzahl von Lichtleitern (4), wobei die Lichtleiter (4) eine langgestreckte Geometrie aufweisen, die sich zwischen der Vielzahl von Lichtquellen (5) und dem Lichtstrahler (3) erstreckt, mit einem Einlassabschnitt (11) eines jeden der Lichtleiter (4), der zumindest einer aus der Vielzahl von Lichtquellen (5) zugewandt ist, und einem Auslassabschnitt (12) eines jeden der Lichtleiter (4), der dem Lichtstrahler (3) zugewandt ist, wobei der Lichtstrahler (3) angeordnet ist, um einen Glühfaden einer Glühlampe zu imitieren, wobei die besagte Lampenanordnung (1) weiter einen Kühlkörper (16) umfasst, der eine rippenartige Geometrie (18, 28) aufweist, die sich in die Richtung der Längsmittelachse L von den Lichtleitern (4) weg erstreckt, wobei der besagte Kühlkörper thermisch mit den Lichtleitern (4) verbunden ist, **dadurch gekennzeichnet, dass** die rippenartige Geometrie zwei Schenkel (18, 28) umfasst, die einen Ausschnitt (21) aufweisen, um es den Lichtleitern (4) und dem Lichtstrahler (3) zu erlauben, den Kühlkörper (16) zu überbrücken, indem sie sich durch den besagten Ausschnitt (21) hindurch erstrecken.

2. Lampenanordnung nach Anspruch 1, wobei die Lichtleiter (4) durch massive Körper gebildet werden.

3. Lampenanordnung nach einem der vorstehenden Ansprüche, wobei die Vielzahl von Lichtleitern (4) und der Lichtstrahler (3) verbunden sind, um einen einheitlichen Körper zu bilden.

4. Lampenanordnung nach einem der vorstehenden Ansprüche, wobei der Einlassabschnitt (11) eines einzelnen Lichtleiters (4) aus der Vielzahl von Lichtleitern angeordnet ist, um Licht aus mehr als einer einzeln angeordneten Lichtquelle (5) oder mehr als einer Gruppe von Lichtquellen (5) zu empfangen.

5. Lampenanordnung nach einem der vorstehenden Ansprüche, wobei die Längsmittelachsen (L2) aus der Vielzahl von Lichtleitern (4) senkrecht zu der Längsmittelachse (L1) des Lichtstrahlers (3) angeordnet sind.

6. Lampenanordnung nach einem der vorstehenden Ansprüche, wobei die Vielzahl von Lichtleitern (4) eine nicht lineare Längsausdehnung aufweisen.

7. Lampenanordnung nach einem der vorstehenden Ansprüche, wobei die Vielzahl von Lichtleitern (4) aus einem Material gefertigt sind, das eine vollständige interne Reflexion von Licht erlaubt, das den Lichtleitern (4) aus der Vielzahl von Lichtquellen (5) zugeführt wird.

8. Lampenanordnung nach einem der vorstehenden Ansprüche, weiter umfassend eine Vielzahl von Lichtsammeleinrichtungen (14), wobei eine Lichtsammeleinrichtung im Übergang zwischen einer Lichtquelle (5) oder einer Gruppe von Lichtquellen, und dem Einlassabschnitt (11) eines einzelnen Lichtleiters (4) angeordnet ist.

9. Lampenanordnung nach einem der vorstehenden Ansprüche, wobei der Lichtstrahler (3) aus Kunststoff, Glas, Keramik oder einem auf Silikon basierenden, Licht streuende Partikel umfassenden Material gefertigt ist.

10. Lampenanordnung nach einem der vorstehenden Ansprüche, wobei der Lichtstrahler (3) einen Reflektor oder Licht streuende Metallpartikel umfasst.

11. Lampenanordnung nach einem der vorstehenden Ansprüche, wobei die Auslassabschnitte (12) aus der Vielzahl von Lichtleitern (4), die dem Lichtstrahler (3) zugewandt sind, Leuchtstoff umfassen, oder wobei der Lichtstrahler (3) Leuchtstoff umfasst.

12. Lampenanordnung nach einem der vorstehenden Ansprüche, wobei der Kühlkörper (16) aus Metall, einem wärmeleitenden Kunststoffmaterial oder Glas gefertigt ist.

13. Lampenanordnung nach einem der Ansprüche 1 bis 11, wobei der Kühlkörper (16) aus einem transparenten Material gefertigt ist.

14. Lampenanordnung nach einem vorstehenden Anspruch, weiter umfassend eine zusätzliche Komponente aus der Gruppe, die aus einer Glühbirne, einer Fassung und einer Treiber-Platine besteht.

## Revendications

1. Ensemble lampe (1), comprenant une structure de support (2) supportant une pluralité de sources de lumière (5), un axe central longitudinal L, un radiateur de lumière (3) et une pluralité de guides de lumière (4), les guides de lumière (4) ayant une géométrie allongée s'étendant entre la pluralité de sources de lumière (5) et le radiateur de lumière (3) avec une partie entrée (11) de chacun des guides de lumière (4) faisant face à au moins une de la pluralité de sources de lumière (5) et une partie sortie (12) de chacun des guides de lumière (4) faisant face au radiateur de lumière (3), le radiateur de lumière (3) étant agencé pour imiter un filament lumineux d'une lampe incandescente, ledit ensemble lampe (1) comprenant en outre un dissipateur de chaleur (16) ayant une géométrie de type ailette (18, 28) s'étendant dans la direction de l'axe central longitudinal L loin des guides de lumière (4), ledit dissipateur de chaleur étant thermiquement connecté aux guides de lumière (4), **caractérisé en ce que** la géométrie de type ailette comprend deux pattes (18, 28) ayant une découpe (21) pour permettre aux guides de lumière (4) et au radiateur de lumière (3) d'être reliés au dissipateur de chaleur (16) en s'étendant à travers ladite découpe (21).

2. Ensemble lampe selon la revendication 1, dans lequel les guides de lumière (4) sont constitués par des corps massifs.

3. Ensemble lampe selon l'une quelconque des revendications précédentes, dans lequel la pluralité de guides de lumière (4) et le radiateur de lumière (3) se rejoignent pour former un même corps unitaire.

4. Ensemble lampe selon l'une quelconque des revendications précédentes, dans lequel la partie entrée (11) d'un guide de lumière individuel (4) de la pluralité de guides de lumière est agencée pour recevoir de la lumière provenant de plus d'une source de lumière individuellement agencée (5) ou de plus d'un groupe de sources de lumière (5).

5. Ensemble lampe selon l'une quelconque des revendications précédentes, dans lequel les axes centraux longitudinaux (L2) de la pluralité de guides de lumière (4) sont agencés perpendiculairement à l'axe central longitudinal (L1) du radiateur de lumière (3).

6. Ensemble lampe selon l'une quelconque des revendications précédentes, dans lequel la pluralité de guides de lumière (4) ont une extension longitudinale non linéaire.

7. Ensemble lampe selon l'une quelconque des revendications précédentes, dans lequel la pluralité de guides de lumière (4) sont composés d'un matériau permettant une réflexion interne totale de lumière fournie aux guides de lumière (4) depuis la pluralité de sources de lumière (5).

8. Ensemble lampe selon l'une quelconque des revendications précédentes, comprenant en outre une pluralité d'agencements de collecte de lumière (14), dans lequel un agencement de collecte de lumière est agencé dans la transition entre une source de lumière (5) ou un groupe de sources de lumière et la partie entrée (11) d'un guide de lumière individuel (4).

9. Ensemble lampe selon l'une quelconque des revendications précédentes, dans lequel le radiateur de lumière (3) est composé de plastique, de verre, de céramique ou d'un matériau à base de silicone comprenant des particules de dispersion de lumière.

10. Ensemble lampe selon l'une quelconque des revendications précédentes, dans lequel le radiateur de lumière (3) comprend un réflecteur ou des particules métalliques de dispersion de lumière.

11. Ensemble lampe selon l'une quelconque des revendications précédentes, dans lequel les parties sorties (12) de la pluralité de guides de lumière (4) faisant face au radiateur de lumière (3) comprennent du phosphore, ou dans lequel le radiateur de lumière (3) comprend du phosphore.

12. Ensemble lampe selon l'une quelconque des revendications précédentes, dans lequel le dissipateur de chaleur (16) est composé de métal, d'un matériau plastique thermoconducteur ou de verre.

13. Ensemble lampe selon l'une quelconque des revendications 1 à 11, dans lequel le dissipateur de chaleur (16) est composé d'un matériau transparent.

14. Ensemble lampe selon l'une quelconque des revendications précédentes, comprenant en outre un composant supplémentaire issu du groupe constitué d'une ampoule, d'une douille et d'une PCB pilote.
